# EUROPEAN PATENT APPLICATION

(11) **EP 2 009 321 A2**
(43) Date of publication of application: **31.12.2008**
(21) Application number: 08011704.7
(22) Date of filing: 27.06.2008
(51) Int. Cl.: F16F 9/32, F16F 9/348

(54) **Shock absorber**

(30) Priority: 29.06.2007 JP 2007172985
(71) Applicant: Hitachi Ltd., Chiyoda-ku Tokyo 100-8280 (JP)
(72) Inventor: Kouyama, Masaru, Kawasaki-shi Kanagawa 210-0011 (JP); Murakami, Hiroshi, Kawasaki-shi Kanagawa 210-0011 (JP); Nezu, Takashi, Kawasaki-shi Kanagawa 210-0011 (JP)
(74) Representative: HOFFMANN EITLE

(57) **Abstract**

A piston (2) connected with a piston rod (3) is slidably fitted in a cylinder (1a) having a hydraulic fluid sealed therein. An extension-side main disk valve (21) generates a damping force in a high piston speed region against the flow of hydraulic fluid in an extension-side passage (8). A sub-passage bypasses (9) the extension-side main disk valve, and an extension-side sub disk valve (20) generates a damping force in an intermediate piston speed region. A compression-side main disk valve (19) generates a damping force in the high piston speed region against the flow of hydraulic fluid in a compression-side passage. A sub-passage (15) bypasses the compression-side main disk valve, and a compression-side sub disk valve (22) generates a damping force in the intermediate piston speed region. Damping force characteristics in the intermediate and high piston speed regions can be set according to the valve-opening characteristics of these disk valves. Therefore, it is possible to increase the degree of freedom for setting damping force characteristics.

## Description

The present invention relates to shock absorbers such as a hydraulic shock absorber attached to a suspension system of a vehicle, for example, an automobile.

In general, cylinder-type hydraulic shock absorbers attached to suspension systems of automobiles or other vehicles are structured as follows. A piston connected with a piston rod is slidably fitted in a cylinder having a hydraulic fluid sealed therein. The piston is provided with a damping force generating mechanism including an orifice and a disk valve. The damping force generating mechanism generates a damping force by controlling, through the orifice and the disk valve, the flow of hydraulic fluid induced by sliding movement of the piston in the cylinder, which is caused by the extension and contraction of the piston rod. When the piston speed is low (i.e. in a low piston speed region), the orifice generates a damping force of orifice characteristics. When the piston speed is high (i.e. in a high piston speed region), the disk valve deflects to open, thereby generating a damping force of valve characteristics.

The conventional hydraulic shock absorber enables damping force characteristics to be set for each of the low, intermediate and high piston speed regions. For example, for the low piston speed region, damping force characteristics are set on the basis of the orifice area. For the intermediate piston speed region, damping force characteristics are set based on the valve opening point of the disk valve. For the high piston speed region, damping force characteristics are set on the basis of the flexural rigidity of the disk valve after it has been opened. Japanese Patent Application Publication No. 2005-188602, for example, discloses a hydraulic shock absorber using a piston having a split structure to enable complicated hydraulic fluid passages to be readily made by die forming process.

The above-described conventional hydraulic shock absorber suffers, however, from the following problems. It is necessary in order to improve both the ride quality and steering stability of the vehicle to set optimal damping force characteristics for each of the low, intermediate and high piston speed regions. In the conventional hydraulic shock absorber, damping force in the high piston speed region is increased by increasing the flexural rigidity of the disk valve, for example, by increasing the plate thickness of the disk valve or increasing the number of disks stacked. In this regard, an increase in the flexural rigidity of the disk valve causes a change in the valve opening characteristics of the disk valve. As a result, damping force in the intermediate piston speed region increases excessively. If the damping force in the intermediate piston speed region is adjusted by increasing the orifice area, damping force in the low piston speed region becomes insufficient. Thus, damping force characteristics in the low, intermediate and high piston speed regions interfere with each other. Accordingly, the degree of freedom for setting damping force characteristics is low, and it is difficult to set optimal damping force characteristics for each of the low, intermediate and high piston speed regions.

The present invention has been made in view of the above-described circumstances. Accordingly, an object of the present invention is to provide a shock absorber capable of increasing the degree of freedom for setting damping force characteristics.

The present invention provides a shock absorber including a cylinder, a piston, a piston rod, a partition member, an extension-side valve, a compression-side valve, at least one sub-passage, and at least one sub-valve. The cylinder has a fluid sealed therein. The piston is slidably fitted in the cylinder. The piston rod is connected at one end thereof to the piston. The other end of the piston rod extends to the outside of the cylinder. The partition member has an extension-side passage and a compression-side passage in which a flow of fluid is induced by sliding movement of the piston caused by extension and contraction of the piston rod. The extension-side valve is provided at one side of the partition member to adjust the flow path of the extension-side passage. The compression-side valve is provided at the other side of the partition member to adjust the flow path of the compression-side passage. The at least one sub-passage is provided in the partition member to communicate between the extension-side passage and the compression-side passage. The at least one sub-valve adjusts the flow path of the sub-passage.
Fig. 1 is a vertical sectional view of a piston assembly that is a main part of a hydraulic shock absorber according to a first embodiment of the present invention.
Fig. 2 is a vertical sectional view similar to Fig 1, showing the flow of hydraulic fluid during the extension stroke of a piston rod in the hydraulic shock absorber shown in Fig 1,
Fig. 3 is a plan view of a piston half of the hydraulic shock absorber shown in Fig. 1.
Fig. 4 is a vertical sectional view of a piston of a hydraulic shock absorber according to a second embodiment of the present invention.
Fig. 5 is an exploded perspective view of the piston shown in Fig. 4.
Fig. 6 is an exploded perspective view of the piston shown in Fig. 4 in a state where a valve member has been attached thereto.
Fig. 7 is a plan view of the valve member that is incorporated into the piston shown in Fig 4.
Fig. 8 is a perspective view of the valve member that is incorporated into the piston shown in Fig. 4.
Fig. 9 is an exploded perspective view of a piston according to a modification of the second embodiment of the present invention.
Fig. 10 is a perspective view of a piston half constituting the piston shown in Fig. 9 in a state where valve members have been incorporated therein.
Fig. 11 is a plan view of the piston half shown in Fig. 10.
Fig. 12 is a side view of a valve member that is incorporated into the piston shown in Fig. 9.
Fig. 13 is a perspective view of a valve member that is incorporated into the piston shown in Fig. 9.
Fig. 14 is a graph of damping force characteristics of the hydraulic shock absorber in Fig. 1, showing an example of adjusting damping force in a high piston speed region.
Fig. 15 is a graph of damping force characteristics of the hydraulic shock absorber in Fig. 1, showing an example of adjusting damping force in an intermediate piston speed region.
Fig, 16 is a graph of damping force characteristics of the hydraulic shock absorber in Fig. 1, showing an example of adjusting damping force in low and intermediate piston speed regions.
Fig. 17 is a vertical sectional view of a hydraulic shock absorber according to one embodiment of the present invention.
Fig. 18 is a schematic view of a hydraulic shock absorber having a base valve and a reservoir, to which the present invention is applicable.
Fig. 19 is a schematic view of a hydraulic shock absorber having a damping force generating mechanism provided outside its cylinder, to which the present invention is applicable.

Embodiments of the present invention will be described below in detail with reference to the accompanying drawings.

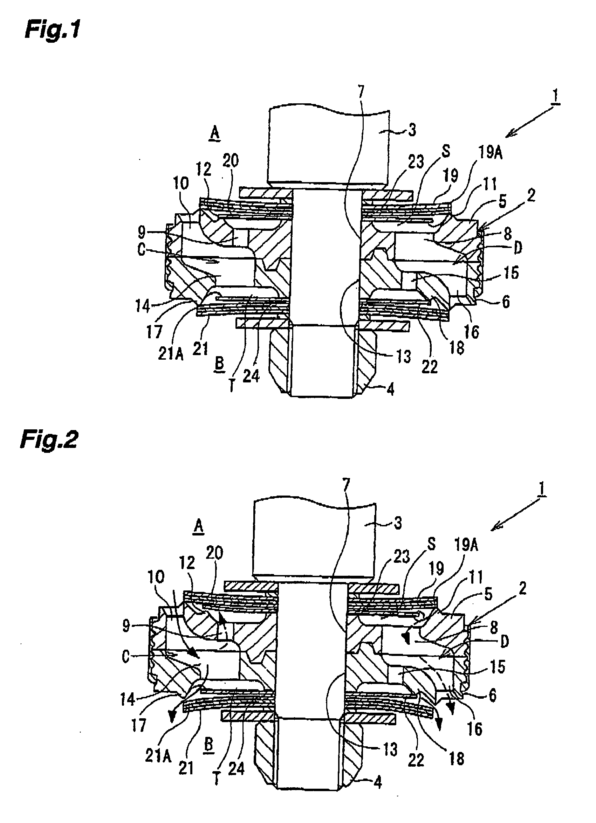

A first embodiment of the present invention will be explained with reference to Figs. 1 to 3 and Figs. 14 to 17.

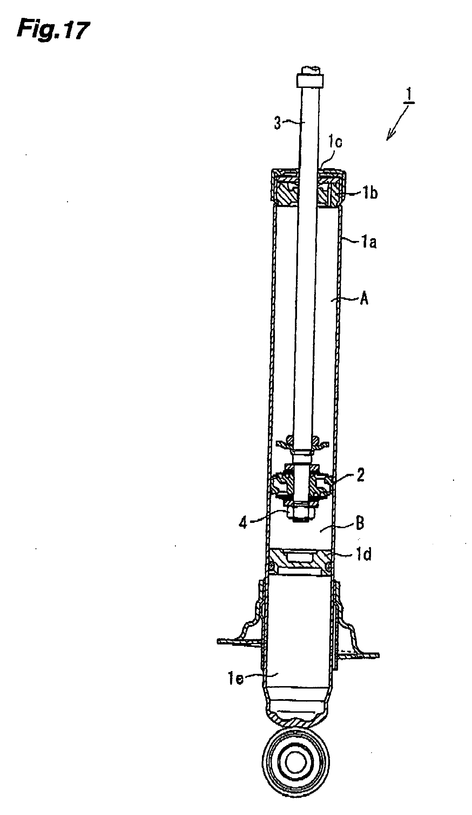

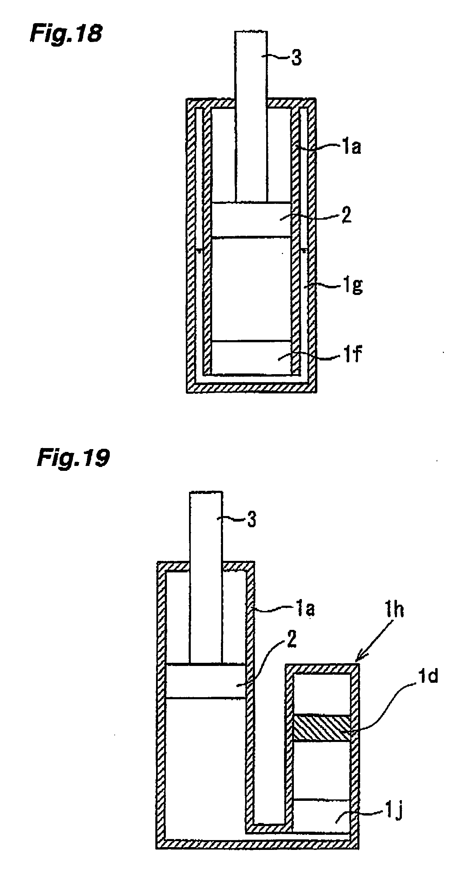

As shown in Fig. 17, a hydraulic shock absorber 1 according to this embodiment is a cylinder-type hydraulic shock absorber attached to a suspension system of an automobile. In the hydraulic shock absorber 1, a piston 2 (partition member) is slidably fitted in a cylinder 1a having a hydraulic fluid sealed therein. The piston 2 divides the inside of the cylinder 1a into two chambers, i.e. a cylinder upper chamber A and a cylinder lower chamber B. One end portion of a piston rod 3 extends through the piston 2 and is connected thereto with a nut 4. The other end portion of the piston rod 3 extends to the outside of the cylinder 1a through a rod guide 1b and an oil seal 1c that are fitted to the upper end of the cylinder 1a. A free piston 1d is slidably fitted in the bottom of the cylinder 1a to form a gas chamber 1e to compensate for a volumetric change in the cylinder 1a due to extension and contraction of the piston rod 3 by the compression and expansion of gas in the gas chamber le. Alternatively, the structure may be as follows. As shown in Fig. 18, a reservoir 1g having a hydraulic fluid and gas sealed therein is connected to the bottom of the cylinder 1a through a base valve 1f (partition member).

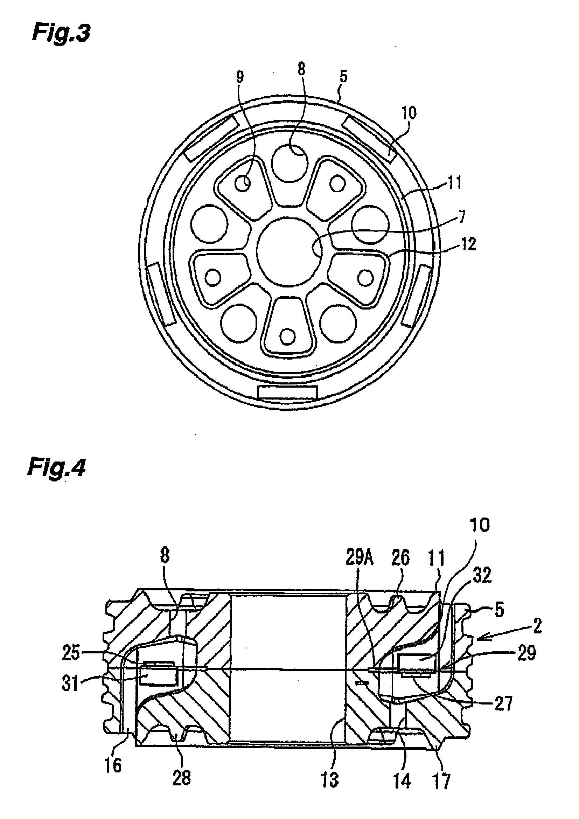

As shown in Fig. 1, the piston 2 has a halved structure comprising an upper first piston half 5 (first member) and a lower second piston half 6 (second member) that are joined together. The first piston half 5 has a circular fitting opening 7 extending through the center thereof. The one end portion of the piston rod 3 is inserted through the fitting opening 7. As shown in Fig. 3, a plurality (5 in the illustrated example) of large-diameter main passages 8 and a plurality (5 in the illustrated example) of small-diameter sub-passages 9 are circumferentially equally and alternately spaced around the opening 7 to extend through and in an axial direction of the first piston half 5. The first piston half 5 further has inlet passages 10 extending through and in an axial direction of an outer peripheral portion thereof outside the sub-passages 9. There are provided the same number of inlet passages 10 as the sub-passages 9, and each inlet passage 10 has a rectangular opening. The sub-passages 9, which are disposed at the inner peripheral side of the first piston half 5, and the inlet passages 10, which are disposed at the outer peripheral side of the first piston half 5, are communicated with each other at the side of the first piston half 5 where it is joined to the second piston half 6.

The first piston half 5 has an annular seat portion 11 (compression-side seat portion) projecting from the upper end surface thereof between the openings of the main passages 8 and sub-passages 9 on the inner side one hand, which are disposed at the inner peripheral side, and on the other the openings of the inlet passages 10, which are disposed at the outer peripheral side. Consequently, the main passages 8 and the sub-passages 9 are disposed at the inner peripheral side of the seat portion 11, and the inlet passages 10 are disposed at the outer peripheral side of the seat portion 11. The first piston half 5 further has an annular sub-seat portion 12 projecting from the upper end surface thereof. The sub-seat portion 12 is disposed in a petal shape to surround the respective openings of the five sub-passages 9. The seat portion 11 projects higher than the sub-seat portion 12. The second piston half 6 has the same or substantially the same configuration as that of the first piston half 5. The second piston half 6 is provided with a fitting opening 13, main passages 14, sub-passages 15, inlet passages 16, a seat portion 17 (extension-side seat portion), and a sub-seat portion 18.

The first piston half 5 and the second piston half 6 are joined together, being circumferentially offset relative to each other by a predetermined central angle to enable the main passages 8 of the first piston half 5 and the inlet passages 16 (and hence the sub-passages 15) of the second piston half 6 to be connected to each other and also enable the inlet passages 10 (and hence the sub-passages 9) of the first piston half 5 and the main passages 14 of the second piston half 6 to be connected to each other at the surfaces of the first and second piston halves 5 and 6 where the first and second piston halves 5 and 6 are joined together.

The inlet passages 10 of the first piston half 5 and the main passages 14 of the second piston half 6, which are connected to each other, form an extension-side passage C that communicate between the cylinder upper chamber A and the cylinder lower chamber B. The main passages 8 of the first piston half 5 and the inlet passages 16 of the second piston half 6, which are connected to each other, form a compression-side passage D that communicates between the cylinder upper chamber A and the cylinder lower chamber B.

A large-diameter compression-side main disk valve 19 (compression-side valve) is seated on the seat portion 11 of the first piston half 5, and a small-diameter extension-side sub disk valve 20 (extension-side sub-valve) is seated on the sub-seat portion 12 of the first piston half 5. Similarly, a large-diameter extension-side main disk valve 21 (extension-side valve) is seated on the seat portion 17 of the second piston half 6, and a small-diameter compression-side sub disk valve 22 (compression-side sub-valve) is seated on the sub-seat portion 18 of the second piston half 6. The valve opening pressure of the extension-side sub disk valve 20 is set lower than that of the extension-side main disk valve 21. The valve opening pressure of the compression-side sub disk valve 22 is set lower than that of the compression-side main disk valve 19. These disk valves are each clamped at the inner peripheral side thereof by tightening of the nut 4 and allowed to deflect at the outer peripheral side thereof and thus lifted from the associated seat portion to open. A spacer 23 is interposed between the respective clamped portions of the compression-side main disk valve 19 and the extension-side sub disk valve 20, thereby allowing the compression-side main disk valve 19 and the extension-side sub disk valve 20 to open and close independently of each other. Similarly, a spacer 24 is interposed between the respective clamped portions of the extension-side main disk valve 21 and the compression-side sub disk valve 22, thereby allowing the extension-side main disk valve 21 and the compression-side sub disk valve 22 to open and close independently of each other. The compression-side main disk valve 19 and the extension-side main disk valve 21 are provided with orifices 19A and 21A (cut portions), respectively, which bypass the associated main disk valves 19 and 21 at all times.

The following is an explanation of the operation of this embodiment arranged as stated above.

Referring to Fig. 2, during the extension stroke of the piston rod 3, the hydraulic fluid in the cylinder upper chamber A is pressurized. Consequently, the hydraulic fluid flows, as shown by the solid-line arrows in Fig. 2, into the cylinder lower chamber B through the extension-side passage C (formed from the inlet passages 10 and the main passages 14) and through the orifice 21A and the extension-side main disk valve 21, thereby generating a damping force in accordance with the aperture of the orifice 21A and the degree of opening of the extension-side main disk valve 21. In addition, as shown by the dashedline arrows in Fig. 2, the hydraulic fluid flowing through the inlet passages 10 passes through the sub-passages 9 and opens the extension-side sub disk valve 20 to pass through an annular chamber S surrounded by the sub-seat portion 12 and the compression-side main disk valve 19 and further passes through the compression-side passage D (formed from the main passages 8 and the inlet passages 16) to flow into the cylinder lower chamber B, thereby generating a damping force in accordance with the degree of opening of the extension-side sub disk valve 20.

In the above-described operation, the orifice 21A generates a damping force in the low piston speed region. The extension-side main disk valve 21 generates a damping force in the high piston speed region. The extension-side sub disk valve 20 generates a damping force in the intermediate piston speed region. Accordingly, it is possible to set damping force characteristics for each of the low, high and intermediate piston speed regions by individually adjusting the characteristics of the orifice 21A. the extension-side main disk valve 21 and the extension-side sub disk valve 20 and hence possible to increase the degree of freedom for setting damping force characteristics for the extension stroke.

It should be noted that damping force characteristics can be adjusted by making the sub-passages 9 (and 15) have different flow path areas, respectively, and/or making each of the extension-side and compression-side sub disk valves 20 and 22 have different pressure-receiving areas for the sub-passages 9 and 15.

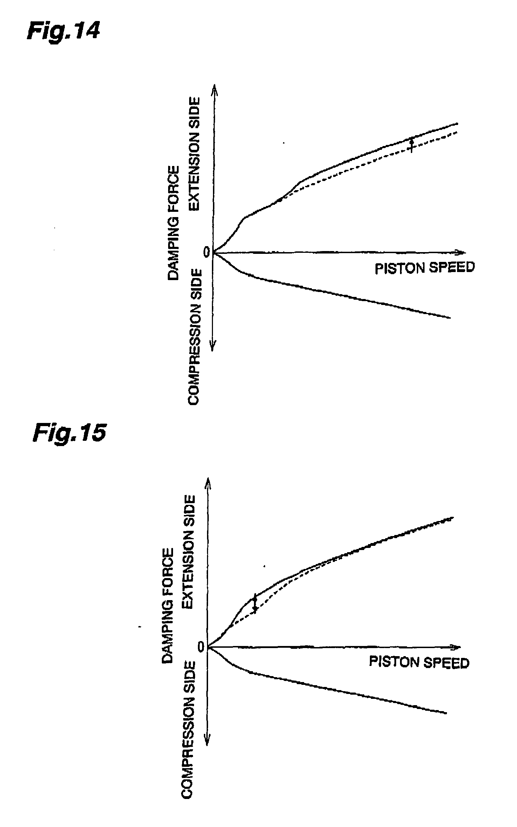

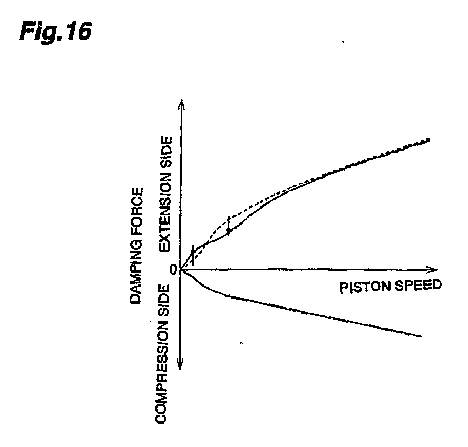

For example, damping force in the high piston speed region can be varied, as shown in Fig. 14, by varying the number of disks (i.e. flexural rigidity thereof) stacked to form the extension-side main disk valve 21. Damping force in the intermediate piston speed region can be varied, as shown in Fig. 15, by varying the number of disks stacked (i.e. flexural rigidity thereof) to form the extension-side sub disk valve 20. It is also possible to increase the damping force in the low piston speed region and, at the same time, to reduce the damping force in the intermediate piston speed region, as shown in Fig. 16, by reducing the orifice 21A and decreasing the number of disks stacked to form the extension-side sub disk valve 20.

During the compression stroke of the piston rod 3, the hydraulic fluid in the cylinder lower chamber B is pressurized. Consequently, the hydraulic fluid flows into the cylinder upper chamber A through the compression-side passage D (formed from the inlet passages 16 and the main passages 8) and through the orifice 19A and the compression-side main disk valve 19, thereby generating a damping force in accordance with the aperture of the orifice 19A and the degree of opening of the compression-side main disk valve 19. In addition, the hydraulic fluid flowing through the inlet passages 16 passes through the sub-passages 15 and opens the compression-side sub disk valve 22 to pass through an annular chamber T surrounded by the seat portion 17 and the extension-side main disk valve 21 and further passes through the extension-side passage C (formed from the main passages 14 and the inlet passages 10) to flow into the cylinder upper chamber A, thereby generating a damping force in accordance with the degree of opening of the compression-side sub disk valve 22.

In the above-described operation, the orifice 19A generates a damping force in the low piston speed region. The compression-side main disk valve 19 generates a damping force in the high piston speed region. The compression-side sub disk valve 22 generates a damping force in the intermediate piston speed region. Accordingly, it is possible to set damping force characteristics for each of the low, high and intermediate piston speed regions by individually adjusting the characteristics of the orifice 19A, the compression-side main disk valve 19 and the compression-side sub disk valve 22, and hence possible to increase the degree of freedom for setting damping force characteristics for the compression stroke.

The first and second piston halves 5 and 6 have various passages formed along their axial directions and have no portion that forms an undercut during forming process, and therefore can be easily die-formed by sintering or the like. Because the first and second piston halves 5 and 6 can have the same or substantially the same configuration as each other, the production cost can be reduced.

The sub-seat portions 12 and 18 are each disposed substantially in a petal shape, and the extension-side and compression-side main disk valves 21 and 19 abut against the sub-seat portions 18 and 12, respectively, when they receive pressures from the cylinder lower chamber B and the cylinder upper chamber A at their back sides. This structure limits the amount of deflection of the extension-side and compression-side main disk valves 21 and 19, and hence makes it possible to improve the durability of the extension-side and compression-side main disk valves 21 and 19.

Next, a second embodiment of the present invention will be explained with reference to Figs. 4 to 8. It should be noted that only the piston of this embodiment is shown in Figs. 4 to 8, in which members or portions similar to those in the foregoing first embodiment are denoted by the same reference numerals as used in the first embodiment, and only portions in which the second embodiment differs from the first embodiment will be explained in detail.

As shown in Figs. 4 to 6, the first piston half 5 in this embodiment does not have the sub-passages 9 and the sub-seat portion 12. The first piston half 5 has communication grooves 25 (sub-passages) formed on a surface thereof at which the first piston half 5 is joined to the second piston half 6, in place of the sub-passages 9. The communication grooves 25 communicate between the main passages 8 and the inlet passages 10, which are alternately disposed in the circumferential direction. The first piston half 5 further has arcuate support portions 26 projecting from the upper end surface thereof at the inner peripheral side of the seat portion 11, in place of the sub-seat portion 12, to support the compression-side main disk valve 19 against the pressure in the cylinder upper chamber A.

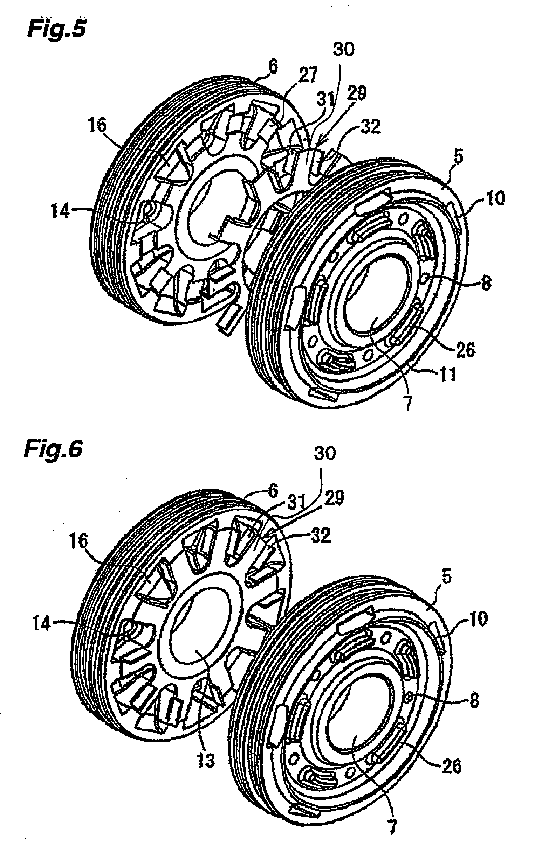

The second piston half 6 is provided with communication grooves 27 (sub-passages) and support portions 28 in the same way as the first piston half 5. The communication grooves 25 of the first piston half 5 are not visible in Fig. 5, but they are arranged in the same way as the communication grooves 27 of the second piston half 6. The support portions 28 of the second piston half 6 are not visible in Fig. 5, but they are arranged in the same way as the support portions 26 of the first piston half 5.

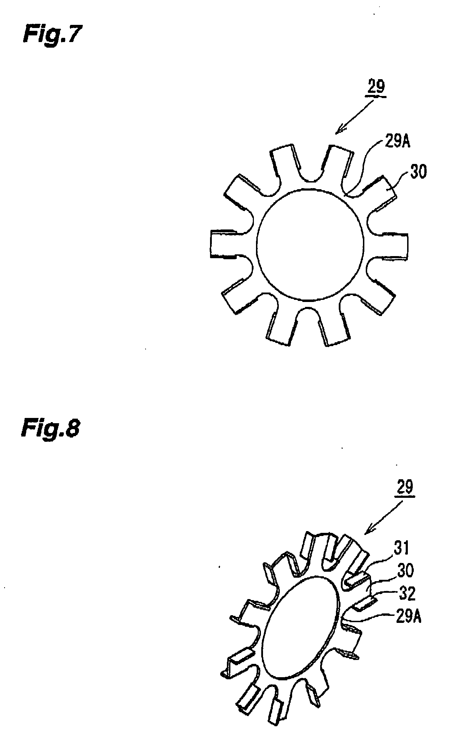

A valve member 29 (sub-valve) is interposed between the respective surfaces of the first piston half 5 and the second piston half 6 where the first and second piston halves 5 and 6 are joined together. The valve member 29 has, as shown in Figs. 7 and 8, an annular clamped portion 29A clamped between the first and second piston halves 5 and 6 and a plurality of valve portions (including plate portions 30 and valves 31 and 32) radially extending from the clamped portion 29A to cover the communication grooves 25 and 27. Each valve portion has a plate portion 30 and a pair of valves 31 and 32 formed from circumferentially opposite end portions of the plate portion 30 that are bent at right angles in mutually opposite directions. The valve 31 closes one end of the associated communication groove 27, and the valve 32 closes one end of the associated communication groove 25. More specifically, as shown in Figs. 5 and 6, the lower surfaces of the plate portions 30 (i.e. the surfaces closer to the second piston half 6) cover the communication grooves 27, and the valves 31 control the flow of hydraulic fluid in the communication grooves 27. On the other hand, the upper surfaces of the plate portions 30 (i.e. the surfaces closer to the first piston half 5) cover the communication grooves 25, and the valves 32 control the flow of hydraulic fluid in the communication grooves 25.

The valves 31 and 32 operate as check valves that selectively open and close the communication grooves 27 and 25, respectively, and also function as pressure control valves that deflect to open upon receiving the pressures of hydraulic fluid in the communication grooves 27 and 25. The valves 31 and 32 control the flow path areas of the communication grooves 27 and 25 according to the degree of opening thereof. Thus, the extension-side passage C and the compression-side passage D are communicated with each other by the communication grooves 25 and 27, and the flow path areas thereof are controlled according to the degree of opening of the valves 31 and 32.

With the above-described arrangement, damping force is generated by the extension-side main disk valve 21 (orifice 21A) and the compression-side main disk valve 19 (orifice 19A) in response to the extension and contraction of the piston rod 3 in the same way as in the first embodiment. In the second embodiment, the valves 31 and 32 open in the high piston speed region, thereby allowing the extension-side passage C and the compression-side passage D to communicate with each other through the communication grooves 25 and 27, and thus bypassing the extension-side main disk valve 21 and the compression-side main disk valve 19.

For example, during the extension stroke of the piston rod 3, the hydraulic fluid in the cylinder upper chamber A flows into the cylinder lower chamber B through the extension-side passage C (formed from the inlet passages 10 and the main passages 14). At this time, a part of the hydraulic fluid flowing through the extension-side passage C passes through the communication grooves 25 and 27 and opens the valves 32 and 31 to flow into the compression-side passage D (formed from the main passages 8 and the inlet passages 16). More specifically, in Fig. 6, a part of hydraulic fluid in each main passage 14 flows into the inlet passages 16 at both sides of the main passage 14 through the upper side (communication groove 25) and lower side (communication groove 27) of the plate portion 30. Thus, the extension-side passage C and the compression-side passage D communicate with each other.

During the compression stroke of the piston rod 3, the hydraulic fluid in the cylinder lower chamber B flows into the cylinder upper chamber A through the compression-side passage D (formed from the inlet passages 16 and the main passages 8). At this time, a part of the hydraulic fluid flowing through the compression-side passage D passes through the communication grooves 25 and 27 and opens the valves 32 and 31 to flow into the extension-side passage C (formed from the main passages 14 and the inlet passages 10). More specifically, in Fig. 6, a part of hydraulic fluid in each inlet passage 16 flows into the main passages 14 at both sides of the inlet passage16 through the upper side (communication groove 25) and lower side (communication groove 27) of the plate portion 30. Thus, the compression-side passage D and the extension-side passage C communicate with each other.

As has been stated above, the second embodiment enables the damping force in the high piston speed region to be reduced according to the degree of opening of the valves 31 and 32.

It should be noted that various damping force characteristics can be set without modifying either of the first and second piston halves 5 and 6 by properly selectively employing a valve member 29 having valves 31 and 32 of various flexibility characteristics. It is also possible to adjust damping force characteristics by differently setting valve opening characteristics (valve characteristics) of the valves 31 and 32 with respect to the communication grooves 25 and 27,

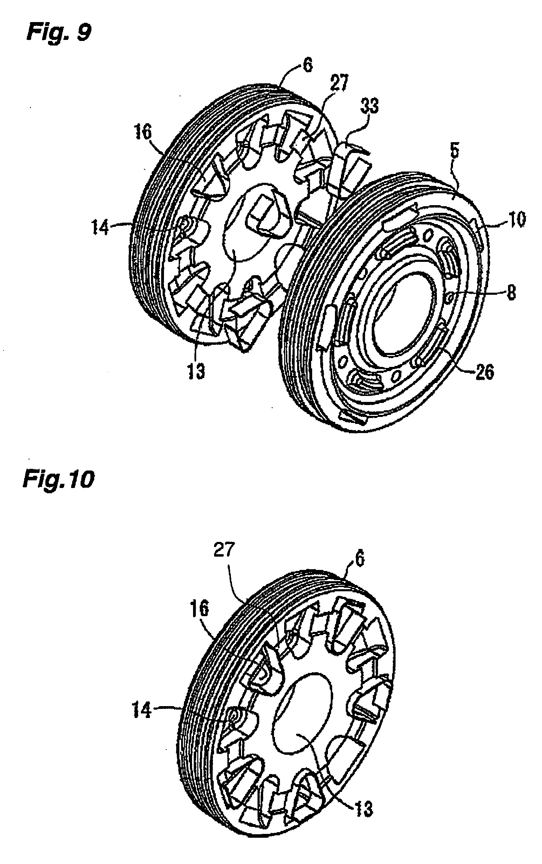

Next, a modification of the above-described second embodiment will be explained with reference to Figs. 9 to 13. It should be noted that members or portions in this modification that are similar to those in the foregoing second embodiment are denoted by the same reference numerals as used in the second embodiment, and only portions in which this modification differs from the second embodiment will be explained in detail.

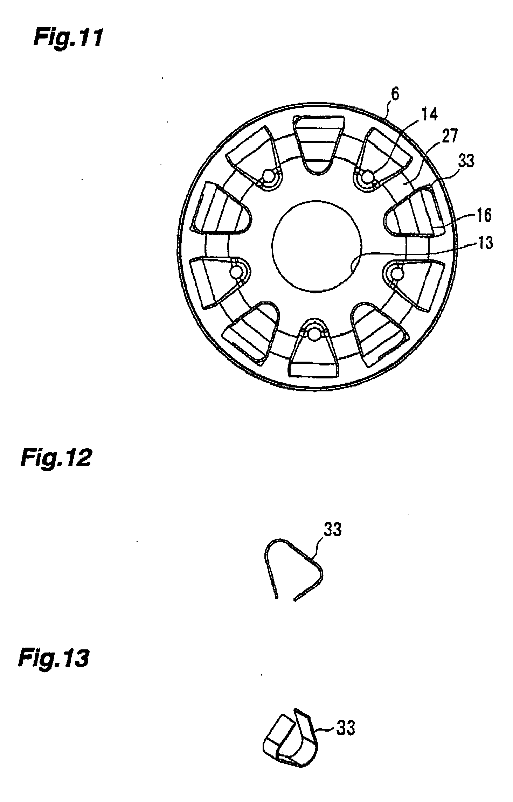

As shown in Figs. 9 to 13 , the shock absorber in this modification is provided with valve members 33 in place of the valve member 29. Each valve member 33 is, as shown in Figs. 12 and 13, a leaf spring member bent in a substantially C-shape (in this embodiment, it is substantially triangular to conform to the shape of the associated fitting portion). The valve members 33 are fitted into the joint surface-side openings of the main passages 8 of the first piston half 5 and those of the inlet passages 16 of the second piston half 6. Each valve member 33 selectively opens and closes the associated communication grooves 25 and 27 by one end portion thereof.

With the above-described arrangement, this modification operates as follows. During the extension stroke of the piston rod 3, the hydraulic fluid in the cylinder upper chamber A flows into the cylinder lower chamber B through the extension-side passage C (formed from the inlet passages 10 and the main passages 14). At this time, a part of the hydraulic fluid flowing through the extension-side passage C passes through the communication grooves 25 and 27 and opens the one end portion of each valve member 33 to flow into the compression-side passage D (formed from the main passages 8 and the inlet passages 16). More specifically, in Fig. 6, a part of hydraulic fluid in each main passage 14 flows into the inlet passage 16 counterclockwise adjacent to the main passage 14 through the communication grooves 25 and 27. Thus, during the extension stroke of the piston rod 3, the extension-side passage C and the compression-side passage D communicate with each other, and the damping force in the high piston speed region can be reduced according to the degree of opening of the valve members 33.

Although in Figs. 9 to 11 the valve members 33 are fitted into the main passages 8 of the first piston half 5 and the inlet passages 16 of the second piston half 6, the valve members 33 may be fitted into the inlet passages 10 of the first piston half 5 and the main passages 14 of the second piston half 6. In the latter case, during the compression stroke of the piston rod 3, the hydraulic fluid in the cylinder lower chamber B flows into the cylinder upper chamber A through the compression-side passage D (formed from the inlet passages 16 and the main passages 8). At this time, a part of the hydraulic fluid flowing through the compression-side passage D passes through the communication grooves 25 and 27 and opens the one end portion of each valve member 33 to flow into the extension-side passage C (formed from the main passages 14 and the inlet passages 10). Thus, during the compression stroke of the piston rod 3, the compression-side passage D and the extension-side passage C communicate with each other, and the damping force in the high piston speed region can be reduced according to the degree of opening of the valve members 33.

As has been stated above, the valve members 33 operate in the same way as the valve member 29 in the second embodiment. That is, the valve members 33 operate as check valves that selectively open and close the communication grooves 25 and 27, and also function as pressure control valves that deflect to open upon receiving the pressures of hydraulic fluid in the communication grooves 25 and 27. The valve members 33 control the flow path areas of the communication grooves 25 and 27 according to the degree of opening thereof.

With the above-described arrangement, the modification offers advantageous effects similar to those in the second embodiment.

It should be noted that the seat portions on which the valve members 33 seat and unseat when closing and opening the communication grooves 25 and 27 may be made of a synthetic resin material in view of sealing performance and silent operation.

In the foregoing embodiments and the modification of the second embodiment, the present invention is applied to the piston, by way of example. The present invention. however, is not necessarily limited to the piston but may be similarly applied, for example as shown in Fig. 18, to the base valve 1f (partition member) that divides the inside of the cylinder 1a and the reservoir 1g from each other. Alternatively, the present invention is also similarly applicable to a hydraulic shock absorber having, as shown in Fig. 19, a damping force generating mechanism 1h provided outside the cylinder 1a. More specifically, the present invention is applicable to a partition member 1j that forms a hydraulic fluid passage in the damping force generating mechanism 1h.

In the foregoing embodiments and the modification of the second embodiment, the present invention has been described with regard to a hydraulic shock absorber that generates a damping force by controlling the flow of hydraulic oil. The present invention, however, is not necessarily limited thereto but may be similarly applied to a shock absorber that generates a damping force by controlling the flow of other hydraulic fluid, e.g. a gas.

As has been stated above, the shock absorber according to the present invention enables the characteristics of the extension-side and compression-side valves and sub-valves to be set independently of each other, and hence makes it possible to increase the degree of freedom for setting damping force characteristics.

Although only some exemplary embodiments of this invention have been described in detail above, those skilled in the art will readily appreciate that many modifications are possible in the exemplary embodiments without materially departing from the novel teaching and advantages of this invention. Accordingly, all such modifications are intended to be included within the scope of this invention.

The present application claims priority under 35 U.S.C. section 119 to Japanese Patent Application No. 2007-172985, filed on June 29, 2007. The entire disclosure of Japanese Patent Application No. 2007-172985 including specification, claims, drawings and summary is incorporated herein by reference in its entirety.

## Claims

1. A shock absorber comprising:
a cylinder having a fluid sealed therein;
a piston slidably fitted in said cylinder;
a piston rod connected at one end thereof to said piston, the other end of said piston rod extending to an outside of said cylinder;
a partition member having an extension-side passage and a compression-side passage in which a flow of fluid is induced by sliding movement of said piston caused by extension and contraction of said piston rod;
an extension-side valve provided at one side of said partition member to adjust a flow path of said extension-side passage;
a compression-side valve provided at the other side of said partition member to adjust a flow path of said compression-side passage;
at least one sub-passage provided in said partition member to communicate between said extension-side passage and said compression-side passage; and
at least one sub-valve that adjusts a flow path of said sub-passage.

2. The shock absorber of claim 1, wherein said sub-passage has:
an extension-side sub-passage that allows the fluid to flow from said extension-side passage to said compression-side passage; and
a compression-side sub-passage that allows the fluid to flow from said compression-side passage to said extension-side passage;
said sub-valve having:
an extension-side sub-valve that generates a damping force against a flow of fluid in said extension-side sub-passage: and
a compression-side sub-valve that generates a damping force against a flow of fluid in said compression-side sub-passage.

3. The shock absorber of claim 1, wherein said partition member is said piston.

4. The shock absorber of claim 1, wherein said cylinder is connected with a reservoir through said partition member.

5. The shock absorber of claim 1, wherein said partition member is formed from a first member and a second member that are substantially disk-shaped members axially joined to each other, said sub-passage being formed on surfaces of said first member and said second member where said first member and said second member are joined together.

6. The shock absorber of claim 5, wherein said sub-valve has:
a clamped portion clamped between said first member and said second member; and
a valve portion extending from said clamped portion to adjust a flow path of said sub-passage.

7. The shock absorber of claim 1, wherein said sub-valve is a substantially C-shaped leaf spring member fitted in said extension-side passage or said compression-side passage to selectively open and close said sub-passage.

8. The shock absorber of claim 1, further comprising:
an annular extension-side seat portion provided on the one side of said partition member, said extension-side valve being seated on said extension-side seat portion; and
an annular compression-side seat portion provided on the other side of said partition member, said compression-side valve being seated on said compression-side seat portion;
said extension-side passage opening at an inner peripheral side of said extension-side seat portion on the one side of said partition member and opening at an outer peripheral side of said compression-side seat portion on the other side of said partition member;
said compression-side passage opening at an outer peripheral side of said extension-side seat portion on the one side of said partition member and opening at an inner peripheral side of said compression-side seat portion on the other side of said partition member;
said shock absorber further comprising:
an annular sub-seat portion provided at the inner peripheral side of at least one of said extension-side seat portion and said compression-side seat portion, said sub-valve being seated on said sub-seat portion;
said sub-passage opening at an inner peripheral side of said sub-seat portion and communicating with said extension-side passage or said compression-side passage that opens at the outer peripheral side of said extension-side seat portion or said compression-side seat portion at an outer peripheral side of said sub-seat portion.

9. The shock absorber of claim 8, wherein said partition member, said extension-side valve, said compression-side valve and said sub-valve are disk-shaped members having respective openings in their centers and stacked over one another and united together by a rod member inserted through said openings.

10. The shock absorber of claim 8, wherein, on the one side of said partition member, an opening of said extension-side passage or said compression-side passage at the inner peripheral side of said extension-side seat portion or said compression-side seat portion and an opening of said sub-seat portion are alternately disposed in a circumferential direction.

11. The shock absorber of claim 8, wherein said partition member is formed from a first member and a second member that are substantially disk-shaped members axially joined to each other;
said sub-passage being formed from holes extending through and in an axial direction of said first member and said second member.

12. The shock absorber of claim 1, wherein said sub-passage comprises a plurality of sub-passages having different flow path areas.

13. The shock absorber of claim 1, wherein said sub-passage comprises a plurality of sub-passages;
said sub-valve having different pressure-receiving areas for said sub-passages.

14. The shock absorber of claim 1, wherein said sub-passage comprises a plurality of sub-passages;
a plurality of said sub-valve being provided independently for each of said sub-passages, each of the plurality of said sub-valves having different valve characteristics for said sub-passages.

15. The shock absorber of claim 7, wherein a seat portion on which said leaf spring member seats and unseats when closing and opening said sub-passage is made of a synthetic resin material.

16. The shock absorber of claim 1, wherein said sub-valve opens at a lower pressure than said extension-side valve or said compression-side valve.

17. The shock absorber of claim 1, wherein said partition member is provided outside said cylinder.
